# EUROPEAN PATENT APPLICATION

(11) **EP 2 169 382 A2**
(43) Date of publication of application: **31.03.2010**
(21) Application number: 09171585.4
(22) Date of filing: 29.09.2009
(51) Int. Cl.: G01N 15/14

(54) **A sample analyzer, and a method for analyzing a sample**

(30) Priority: 30.09.2008 JP 2008253498
(71) Applicant: SYSMEX CORPORATION, Kobe-shi, Hyogo 651-0073 (JP)
(72) Inventor: Kusuzawa, Hideo, Hyogo 651-0073 (JP)
(74) Representative: HOFFMANN EITLE

(57) **Abstract**

A sample analyzer comprising a flow cell for forming a sample flow, a light source for irradiating the sample flow in the flow cell with near ultraviolet flight, and an imaging section for taking an image of a particle contained in the sample flow irradiated with the near ultraviolet light by the light source is disclosed.

A method for analyzing a sample is also disclosed.

## Description

### FIELD OF THE INVENTION

The present invention relates to a sample analyzer and a method for analyzing a sample such as urine, blood, and the like.

### BACKGROUND

Conventionally, there is a known flow cytometer with an imaging function. For example, JP Laid-open patent H10-73528 discloses a flow cytometer with an imaging function, which includes: a sheath flow cell for flowing a particle-containing sample therein to form a sample flow; a near infrared light source for irradiating the sample flow with near infrared light; an imaging device for taking an image of a particle in the sample flow that is irradiated with the near infrared light; and an image processing section for processing the particle image.

The flow cytometer disclosed in JP Laid-open patent H10-73528 uses the near infrared light source as a light source for irradiating the sample flow, and is capable of suitably taking an image of a state inside a particle because the near infrared light emitted from the near infrared light source has high penetrability with respect to particles. Thus, for example, the flow cytometer is suitable for taking an image of a nucleus a cell contained in a sample. On the other hand, when the near infrared light is used, the contrast between a background image and a particle image is not clearly exhibited, and the outline of a particle may be blurred.

### SUMMARY OF THE INVENTION

The scope of the invention is defined solely by the appended claims, and is not affected to any degree by the statements within this summary.

A first aspect of the present invention is a sample analyzer comprising: a flow cell for forming a sample flow; a light source for irradiating the sample flow in the flow cell with near ultraviolet light; and an imaging section for taking an image of a particle contained in the sample flow irradiated with the near ultraviolet light by the light source.

A second aspect of the present invention is a method for analyzing a sample comprising: supplying a sample to a flow cell to form a sample flow; irradiating the sample flow with near ultraviolet light; and taking an image of a particle contained in the sample flow irradiated with the near ultraviolet light.

### BRIEF DESCRIPTION OF THE DRAWINGS

FIG. 1 is a perspective view of a urine formed element analyzer (sample analyzer) according to an embodiment of the present invention;
FIG. 2 is a block diagram showing an overall configuration of the urine formed element analyzer;
FIG. 3 is a schematic configuration diagram of a sample preparing section and an optical detector;
FIG. 4 is a schematic diagram showing configurations of the optical detector and an imaging optical system;
FIG. 5 is a block diagram of a system controller;
FIG. 6 is a flow chart showing a procedure of an imaging process of a particle image;
FIGS. 7A and 7B are images of erythrocytes that are taken using a light source of near ultraviolet light (a wavelength of 385 nm); and
FIGS. 7C and 7D are images of erythrocytes that are taken using a light source of near infrared light (a wavelength of 870 nm) .

### DETAILED DESCRIPTION OF THE PREFERRED EMBODIMENTS

Hereinafter, embodiments of a sample analyzer of the invention will be described in detail with reference to the accompanying drawings.

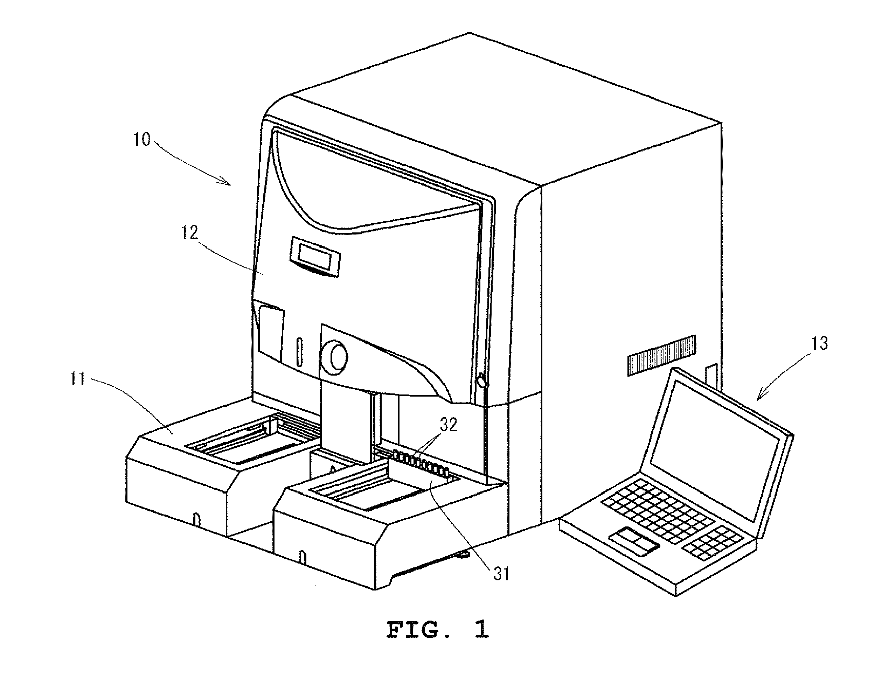

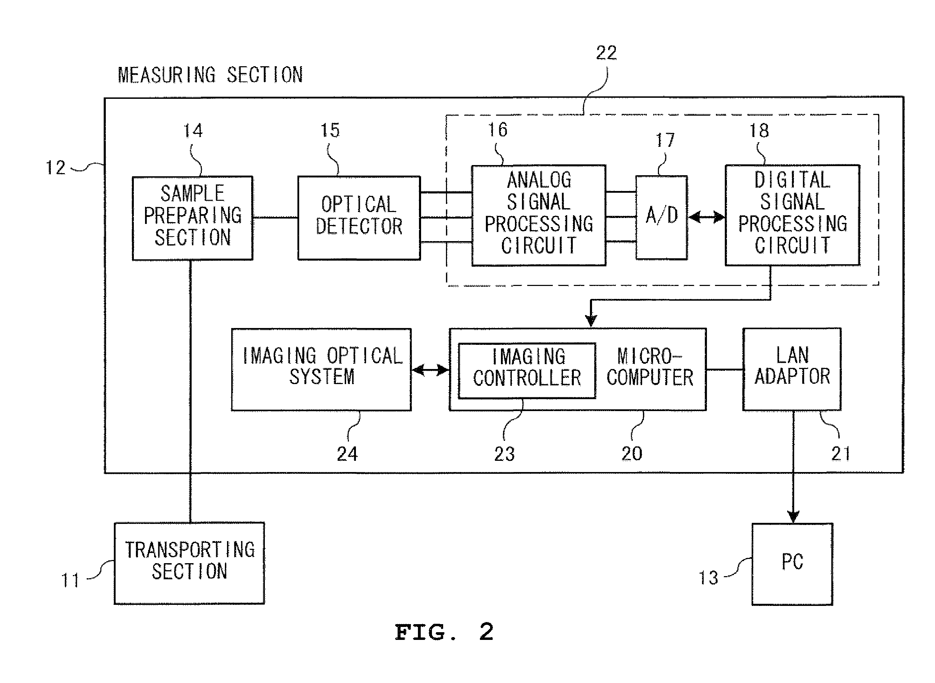

FIG. 1 is a perspective view of a sample analyzer according to an embodiment of the present invention, and FIG. 2 is a block diagram showing an overall configuration of the sample analyzer. In the present embodiment, a urine formed element analyzer 10 will be described as an example of the sample analyzer.

### [Overall Configuration of Sample Analyzer]

Referring to FIG. 1, the urine formed element analyzer (hereinafter, referred to merely as analyzer) 10 includes: a transporting section 11; a measuring section 12 for performing measurement of a sample; and a system controller 13, for analyzing a result of the measurement, which is connected to the measuring section 12. The analyzer 10 is configured to aspirate urine as a sample from each test tube 32 in a rack 31 that is transported by the transporting section 11, and to detect and analyze information about particles such as formed elements, bacteria, and the like from the urine.

Referring to FIG. 2, the measuring section 12 of the analyzer 10 includes: a sample preparing section 14 for preparing a sample from urine contained in each test tube 32 (FIG. 1); an optical detector (particle detection means) 15 for detecting formed elements, bacteria, and the like in the sample, and for outputting, to an analog signal processing circuit 16, an electrical signal in accordance with the characteristics of a detected particle; the analog signal processing circuit 16 for performing amplification, filtration, and the like of the output of the optical detector 15; an A/D converter 17 for converting the output of the analog signal processing circuit 16 into a digital signal; a digital signal processing circuit 18 for performing predetermined waveform processing on the digital signal; a microcomputer 20 connected to the digital signal processing circuit 18; and a LAN adaptor 21 connected to the microcomputer 20. A personal computer (PC) 13 constituting the system controller 13 is LAN-connected to the measuring section 12 via the LAN adaptor 21, and analyzes data obtained by the measuring section 12. The analog signal processing circuit 16, the A/D converter 17, and the digital signal processing circuit 18 constitute a signal processing section 22 for processing the electrical signal outputted by the optical detector 15.

The measuring section 12 also includes: an imaging controller 23 connected to the digital signal processing circuit 18; and an imaging optical system 24 controlled by the imaging controller 23 to take an image of a particle (formed element) in a sample. The imaging controller 23 is one operation part of the microcomputer 20 that includes a CPU and a memory such as a RAM, a ROM, and the like.

### [Schematic Configuration of Sample Preparing Section]

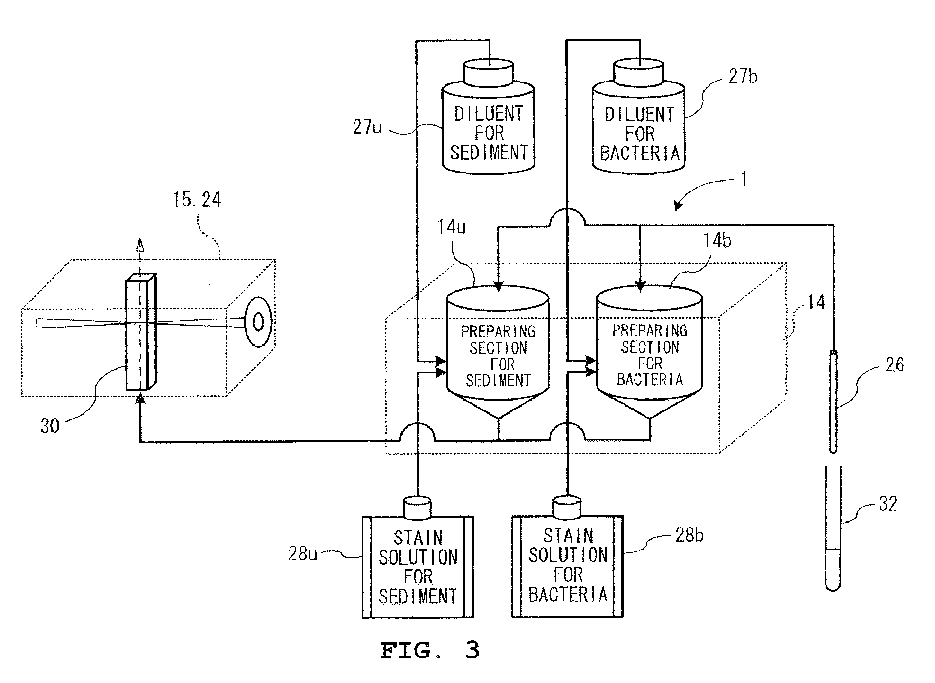

FIG. 3 is a schematic diagram showing configurations of the sample preparing section 14 and the optical detector 15. Urine (a sample) contained in each test tube 32 is aspirated by a syringe pump (not shown) using an aspirating tube 26, and dispensed to the sample preparing section 14. The sample preparing section 14 of the present embodiment includes a first sample preparing section 14u and a second sample preparing section 14b, and an aliquot of the urine is dispensed to each of the first and second sample preparing sections 14u and 14b.

The urine aliquot in the first sample preparing section 14u is mixed with a diluent 27u and a stain solution (stain agent) 28u and becomes stained by a pigment contained in the stain solution 28u. This stained sample becomes a suspension for analyzing urine formed elements with a relatively large size, such as erythrocytes, leukocytes, epithelial cells, casts, and the like.

On the other hand, the urine aliquot in the second sample preparing section 14b is mixed with a diluent 27b and a stain solution (stain agent) 28b and becomes stained by a pigment contained in the stain solution 28b. This stained sample becomes a suspension for analyzing bacteria.

Out of the two types of suspensions (samples) prepared as described above, the suspension (first sample) in the first sample preparing section 14u is led to the optical detector 15 to form, in a sheath flow cell 30, a thin flow of the suspension that is surrounded by a sheath liquid, and the thin flow is irradiated with light from a light source. Then, similarly, the suspension (second sample) in the second sample preparing section 14b is led to the optical detector 15 to form a thin flow of the suspension in the sheath flow cell 30, and the thin flow is irradiated with the light from the light source. Each operation described above is automatically performed by actuating a driving section (not shown) and an electromagnetic valve (not shown) under the control of the microcomputer 20 (controller).

### [Configuration of Optical Detector and Imaging Optical System]

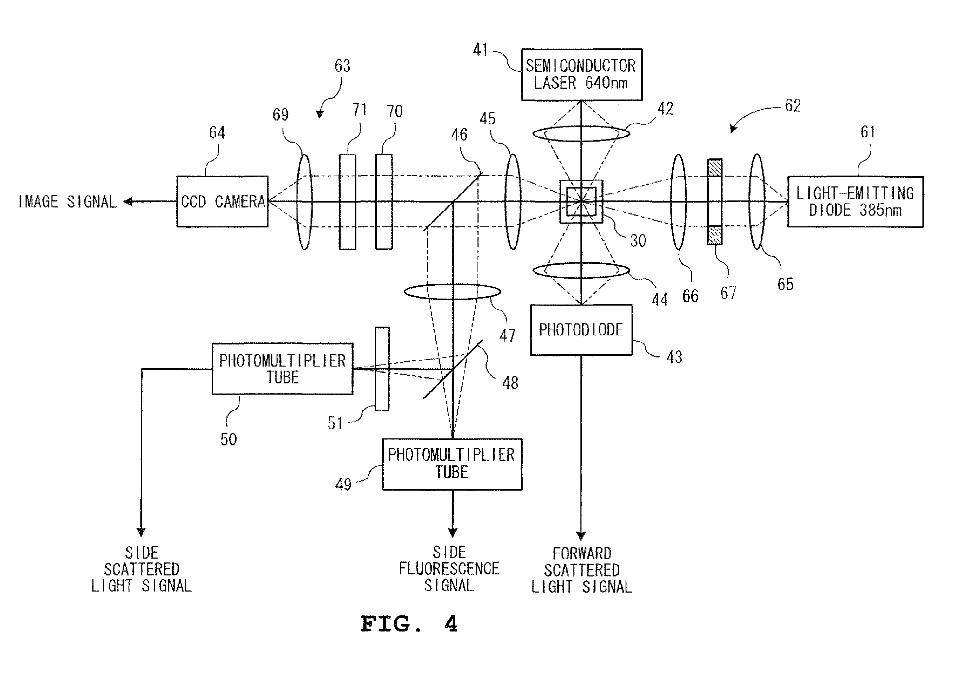

FIG. 4 is a schematic diagram showing configurations of the optical detector 15 and the imaging optical system 24. The optical detector 15 includes: a particle detection light source 41 (hereinafter, referred to merely as light source 41) composed of a semiconductor laser; a condensing lens 42 for converging light of the light source 41 to the sheath flow cell 30; a photodiode 43 as a first light receiver for receiving forward scattered light from a particle in a sample flowing in the sheath flow cell 30; and a condensing lens 44 for converging the forward scattered light to the photodiode 43. A semiconductor laser that emits red light with a peak wavelength around 640 nm is used as the light source 41 of the present embodiment. As the light source 41, a gas laser or a light-emitting diode can be also used instead of the semiconductor laser.

The optical detector 5 includes: a collimator lens 45 for converting side fluorescence and side scattered light from the particle in the sample flowing in the sheath flow cell 30, into parallel light; a first dichroic mirror 46 for reflecting the parallel light; an object lens 47 for converging the side fluorescence and the side scattered light that have been reflected by the first dichroic mirror 46; a second dichroic mirror 48 for allowing the side fluorescence that has passed through the object lens 47 to pass therethrough and for reflecting the side scattered light that has passed through the object lens 47; a photomultiplier tube 49 as a second light receiver for receiving the side fluorescence that has passed through the second dichroic mirror 48; and a photomultiplier tube 50 as a third light receiver for receiving the side scattered light that has been reflected by the second dichroic mirror 48.

The lights received by the photodiode 43 and the photomultiplier tubes 49 and 50 of the optical detector 15 are converted into electrical signals, which are in turn inputted as a forward scattered light signal, a side scattered light signal, and a side fluorescence signal, respectively, to the signal processing section 22 (see FIG. 2). These signals are subjected to predetermined processing by the signal processing section 22, and then stored as detection data (detection signals) in the memory of the microcomputer 20. Further, this detection data is transmitted via the LAN adaptor 21 to the personal computer 13 that constitutes the system controller 13, and analyzed by the personal computer 13.

On the other hand, referring to FIG. 4, the imaging optical system 24 includes a particle imaging light source 61 (hereinafter, referred to merely as light source 61) with an optical axis that is orthogonal to the optical axis of the light source 41 of the optical detector 15 in top view. A light-emitting diode that emits light with a wavelength shorter than that of the light source 41 of the optical detector 15, specifically with a peak wavelength around 385 nm, is used as the light source 61. The optical axis of the light source 61 of the imaging optical system 24 is positioned downstream of the optical axis of the light source 41 of the optical detector 15 in the sample flowing direction.

Any light source can be used as the light source 61 as long as it emits light with a peak wavelength in the near ultraviolet region, and, for example, a light source that emits light with a peak wavelength between 200 nm and 400 nm can be used.

The light source 61 is controlled to perform pulse emission, and preferably controlled to emit light for a light-emitting time shorter than 100 nsec. Thus, a particle flowing in the sheath flow cell 30 can be instantaneously irradiated and an image thereof can be taken. This has the following advantage. If the sheath flow cell 30 is continuously irradiated with light, an image may be taken in which a particle flowing in the flow cell at a high speed is elongated in the direction in which the sample flows. However, by instantaneously irradiating a particle and taking an image thereof, an accurate particle image can be taken in which the shape of a particle is similar to the actual shape.

As a drive circuit for causing the light-emitting diode to perform pulse emission, for example, a circuit disclosed in JP Laid-open patent 2005-269051 can be used.

JP Laid-open patent 2005-269051 is hereby incorporated by reference in its entirety as though fully and completely set forth herein.

The imaging optical system 24 also includes: an irradiation lens system 62 for converging the near ultraviolet light of the light source 61 to the sheath flow cell 30; a CCD camera 64 as an imaging section for taking an image of a particle in a sample flowing in the sheath flow cell 30; an imaging lens system 63 for causing the near ultraviolet light, which is applied to the sheath flow cell 30, to be incident on the camera 64.

The irradiation lens system 62 includes a collimator lens 65 and a condensing lens 66. The collimator lens 65 converts the near ultraviolet light of the light source 61 into parallel light, and the condensing lens 66 converges this parallel light to the sheath flow cell 30. Between the collimator lens 65 and the condensing lens 66, an iris (diaphragm) 67 for setting the numerical aperture (NA) of the irradiation lens system 62 to a predetermined value is provided. The iris 67 of the present embodiment sets the numerical aperture of the irradiation lens system 62 to 0.4.

The imaging lens system 63 includes the collimator lens 45 and an imaging lens 69, and the collimator lens 45 converts light that has passed through the sheath flow cell 30 into parallel light. The collimator lens 45 also serves to convert the side scattered light and the side fluorescence from the particle, which are generated due to the light of the light source 41 of the optical detector 15, into parallel light as described above.

The imaging lens 69 converges the near ultraviolet light that has passed through the first dichroic mirror 46, to form an image on a receiving surface of the camera 64.

Provided between the collimator lens 45 and the imaging lens 69 are: a cut-off filter 70 for cutting off visible light; and a band-pass filter (light selector) 71 for allowing only near ultraviolet light to pass therethrough. The cut-off filter 70 and the band-pass filter 71 assuredly cause the near ultraviolet light to be incident on the camera 64. Thus, light other than the near ultraviolet light emitted from the light source 61 can be cut off, and a particle image in which the outline of a particle is clearly exhibited can be assuredly obtained.

The numerical aperture of the imaging lens system 63 is set to a value greater than the numerical aperture of the irradiation lens system 62. Specifically, because the numerical aperture of the irradiation lens system 62 is set to 0.4 by the iris 67, the numerical aperture of the imaging lens system 63 is set to a value greater than 0.4, for example, to 0.55. By setting the numerical aperture of the imaging lens system 63 to a value greater than the numerical aperture of the irradiation lens system 62 as described above, the near ultraviolet light applied to the sheath flow cell 30 through the irradiation lens system 62 passes through only central portions of the collimator lens 45 and the imaging lens 69 of the imaging lens system 63. Thus, the effect of aberration of each of the lens 45 and 69 is reduced, and an excellent particle image with less blurring and distortion can be obtained. Further, a clear particle image with less diffraction scattering stripes at the outline of a particle can be obtained.

The light source 41 of the optical detector 15 emits red light with a peak wavelength around 640 nm, and the light source 61 of the imaging optical system 24 emits light (near ultraviolet light) with a peak wavelength around 385 nm. The side fluorescence and the side scattered light from the particle, which are generated due to the light of the light source 41 of the optical detector 15, are parallel to the near ultraviolet light of the light source 61 of the imaging optical system 24 to overlap each other. The side scattered light from the particle, which is generated due to the light of the light source 41 of the optical detector 15, has the same peak wavelength (about 640 nm) as that of the light of the light source 41, but the side fluorescence has a longer wavelength (e.g. about 660 to 800 nm) .

Thus, in the present embodiment, a mirror that allows near ultraviolet light with a wavelength of 370 to 400 nm to pass therethrough and reflects light with a wavelength out of this range is used as the first dichroic mirror 46, and the first dichroic mirror 46 is configured to prevent light other than the near ultraviolet light from being incident on the camera 64. Further, a mirror that allows light with a wavelength of 660 to 800 nm to pass therethrough and reflects light with a wavelength out of this range is used as the second dichroic mirror 48, and the second dichroic mirror 48 is configured to prevent light other than the side fluorescence from being incident on the photomultiplier tube 49.

There is the possibility that light with a wavelength that is out of the range from 370 to 400 nm and the range from 660 to 800 nm is incident on the photomultiplier tube 50, and light with a relatively short wavelength (e.g. about 400 to 420 nm) from the light source 61 of the imaging optical system 24 is thought to be incident on the photomultiplier tube 50. Thus, a band-pass filter 51 for allowing light with a wavelength around 640 nm to pass therethrough is preferably provided in front of the photomultiplier tube 50 in order to cause only the side scattered light from the particle, which is generated due to the light of the light source 41 of the optical detector 15, to be incident on the photomultiplier tube 50.

The optical detector 15 detects forward scattered light, side scattered light, and side fluorescence from a particle in a sample flow, and the obtained detection signals are inputted to the microcomputer 20 via the signal processing section 22. Then, the imaging controller 23, which is one operation part of the microcomputer 20, controls the imaging optical system 24 to take a particle image in accordance with the inputted detection signals.

Generally, it is known that a type and a size of a particle such as erythrocytes, leukocytes, epithelial cells, and the like can be determined by the intensities of the signals of the forward scattered light, the side scattered light, and the side fluorescence, which are obtained by the optical detector 15. The imaging controller 23 of the present embodiment is configured to determine a type and a size of a particle from detection signal of the optical detector 15, to cause the imaging optical system 24 to take an image of the particle when determining that the particle is a predetermined particle, and to cause the imaging optical system 24 not to take an image of the particle (to cause the light source 61 not to emit light) when determining that the particle is not the predetermined particle.

Data of a particle image taken by the imaging optical system 24 is stored in the memory of the microcomputer 20. Further, the data of the particle image is transmitted to the personal computer 13, which constitutes the system controller 13, via the LAN adaptor 21, and is subjected to predetermined processing by the personal computer 13.

Here, the light source 61 of the imaging optical system 24, the light source 41 of the optical detector 15, and the optical detector 15 are configured to prevent a particle from being detected due to fluorescence emitted from the particle that is excited by irradiation with the near ultraviolet light from the light source 61 of the imaging optical system 24. Specifically, the light source 61 of the imaging optical system 24, the light source 41 of the optical detector 15, and the optical detector 15 are configured as follows.

At the optical detector 15, a threshold for an amount of light by which a particle is detectable based on fluorescence from the particle irradiated by the light source 41 is set in advance. The amount of light to be emitted by the light source 61 of the imaging optical system 24 is adjusted such that an amount of fluorescence from the particle that is excited by the irradiation with the near ultraviolet light from the light source 61 is less than the threshold.

By configuring so, the emission of the light source 61 does not influence the optical detector 15, and the optical detector 15 can detect a particle accurately.

Here, the technical reason why the peak wavelength of the light source 61 of the imaging optical system 24 is around 385 nm and the peak wavelength of the light source 41 of the optical detector 15 is around 640 nm will be described.

Generally, it is known that fluorescence from a particle that is excited by irradiation with light has a wavelength longer than that of the irradiation light. When a light source that emits light with a wavelength longer than that of near ultraviolet light is used as a light source for particle detection as in the present embodiment, the difference in wavelength between fluorescence emitted from a particle irradiated with the light of the light source for particle detection and fluorescence generated due to the irradiation light of the light source for imaging can be great. Thus, even when fluorescences emitted from a particle irradiated with lights of two different light sources overlap each other, the fluorescences generated due to the two light sources can be accurately separated by using a filter or the like. As a result, the imaging section and the light receiver can be caused to receive lights with appropriate wavelengths, respectively, and a clear particle image and accurate detection data can be obtained.

### [Configuration of System Controller]

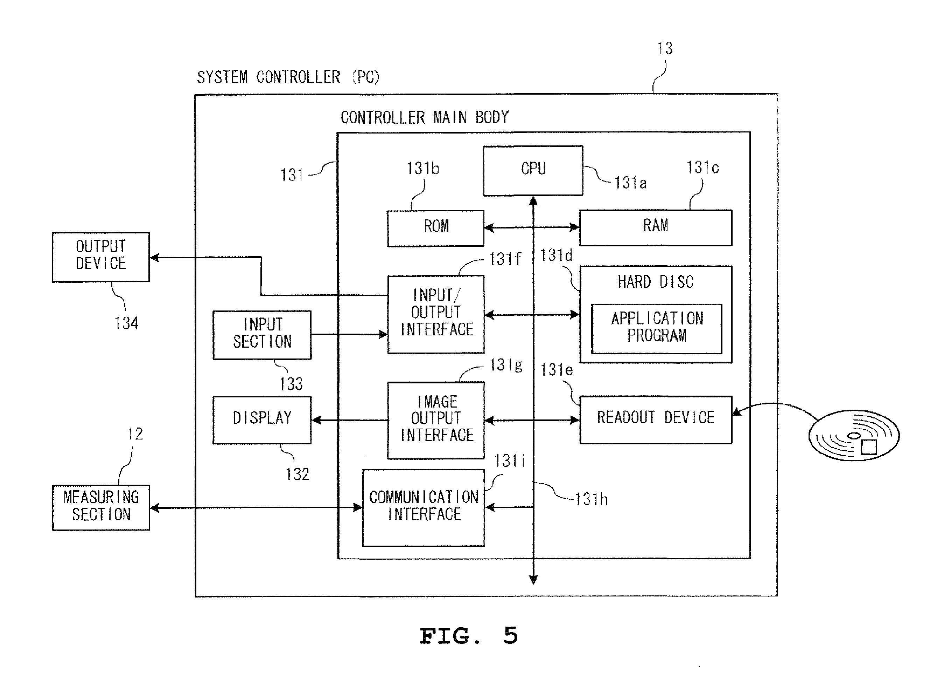

FIG. 5 is a block diagram of the system controller 13. The system controller 13 is composed of a personal computer or the like, mainly including a controller main body 131, a display 132, and an input section 133. The controller main body 131 mainly includes a CPU 131a, a ROM 131b, a RAM 131c, a hard disc 131d, a readout device 131e, an input/output interface 131f, an image output interface 131g, and a communication interface 131i. These components are communicably connected to each other via a bus 131h.

The CPU 131a is capable of executing a computer program stored in the ROM 131b and a computer program loaded into the RAM 131c. The ROM 131b is composed of a mask ROM, a PROM, an EPROM, an EEPROM or the like, and has stored therein: the computer program to be executed by the CPU 131a; data to be used by the computer program; and the like. The RAM 131c is composed of an SRAM, a DRAM, or the like. The RAM 131c is used for reading computer programs stored in the ROM 131b and the hard disc 131d. The RAM 301c is also used as a work area for the CPU 131a at the time of execution of these computer programs.

Installed in the hard disc 131d are: various computer programs to be executed by the CPU 131a, such as an operating system and application programs; and data to be used for executing these computer programs. For example, an operating system that provides a graphical user interlace environment, such as Windows (registered trademark) manufactured and sold by Microsoft Corporation, is installed in the hard disk 131d.

Further, installed in the hard disc 131d is an operation program for performing: transmission of a measurement order (operation order) to the measuring section 12; reception and processing of a measurement result measured by the measuring section 12; display of the processed measurement result; and the like. This operation program runs on the operating system.

The readout device 131e is composed of a flexible disc drive, a CD-ROM drive, a DVD-ROM drive or the like. The readout device 131e is capable of reading a computer program or data, which is stored in a portable storage medium, The input/output interface 131f is composed of, for example, a serial interface such as USB, IEEE1394, and RS-232C; a parallel interface such as SCSI, IDE, and IEEE1284; or an analogue interface including a D/A converter, an A/D converter, and the like. The input section 133 including a keyboard and a mouse, and an output device 134 such as a printer are connected to the input/output interface 131f. Then, an operator can input data to the personal computer by using the input section 133. The communication interface 131i is connected to the measuring section 12 so as to be capable of transmitting/receiving data to/from the measuring section 12.

The image output interface 131g is connected to the display 132 that is composed of an LCD, a CRT or the like. The image output interface 131g outputs, to the display 132, video signals in accordance with image data supplied from the CPU 131a. The display 132 displays thereon an image (screen) based on the inputted video signals.

The forward scattered light signal, the side scattered light signal, and the side fluorescence signal of the measuring section 12 that have been processed by the signal processing section 22 are transmitted by the microcomputer 20 to the system controller 13 via the LAN adaptor 21. The system controller 13 classifies particles in the sample into erythrocyte, leukocyte, epithelial cell, cast, bacteria, and the like based on the forward scattered light signal, the side scattered light signal, and the side fluorescence signal. Further, the system controller 13 creates a scattergram for analyzing particles (formed elements) in urine, and the scattergramis displayed on the display 132. Still further, image data of a predetermined particle that is taken by the imaging optical system 24 is transmitted by the microcomputer 20 to the system controller 13 via the LAN adaptor 21, and the image data is displayed on the display 132 of the system controller 13. [Procedure of Imaging Process of Particle]

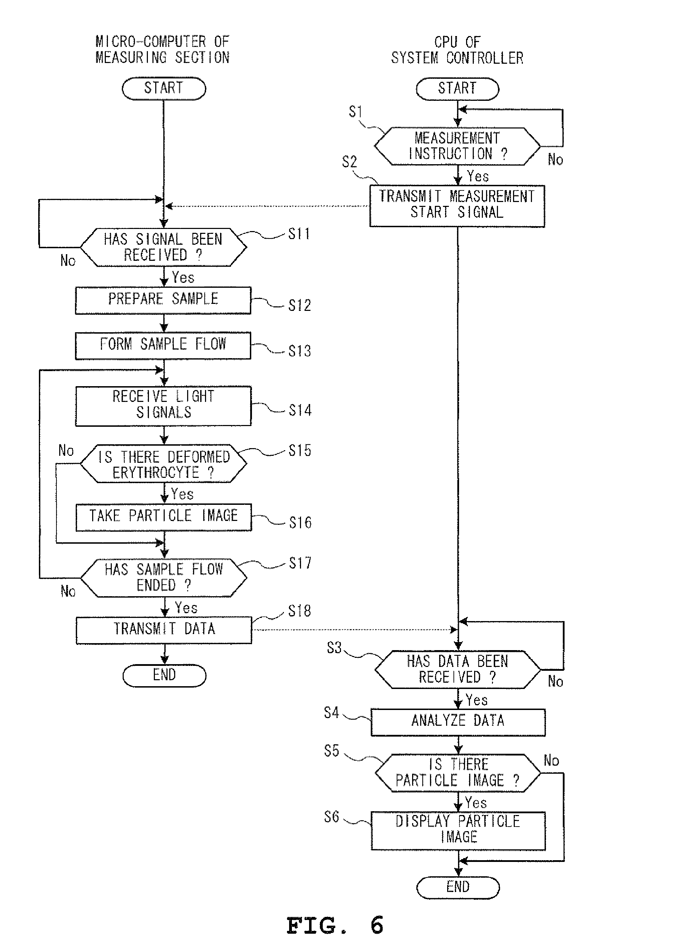

The following will describe a procedure for taking an image of a predetermined particle (deformed erythrocyte in the present embodiment) by the imaging optical system 24. FIG. 6 is a flow chart showing this procedure.

At step S1 in FIG. 6, the CPU 131a of the system controller (PC) 13 determines whether or not an instruction to start measurement has been received. The instruction to start measurement is performed by the operator operating the keyboard or the mouse constituting the input section 133 (see FIG. 5). When determining that the instruction to start measurement has been received (Yes), the CPU 131a of the system controller 13 transmits a measurement start signal to the microcomputer 20 of the measuring section 12 (step S2).

The microcomputer (controller) 20 of the measuring section 12 determines whether or not the measurement start signal transmitted from the system controller 13 has been received (step S11). When determining that the measurement start signal has been received (Yes), the microcomputer 20 controls the sample preparing section 14 to prepare a sample and to form a sample flow in the sheath flow cell 30 (steps S12 and S13).

Next, at step S14, the microcomputer 20 of the measuring section 12 controls the optical detector 15 to cause: the light source 41 to irradiate the sheath flow cell 30 with light; and the photodiode 43 and the photomultiplier tubes 49 and 50 to receive forward scattered light, side scattered light, and side fluorescence, respectively, from a particle in the sample flow. After the lights are received by the photodiode 43 and the photomultiplier tubes 49 and 50, electrical signals based on the received lights are processed by the signal processing section 22. The electrical signals that have been processed by the signal processing section 22 are inputted as detection signals to the microcomputer 20 and stored in the memory. The imaging controller 23 of the microcomputer 20 determines whether or not the detection signals are detection signals of a predetermined particle, namely, of a deformed erythrocyte (step S15). Specifically, when determining that the detection signals based on the particle detected by the optical detector 15 have intensities specific to an erythrocyte and are signals based on a particle smaller in size than a normal erythrocyte, the imaging controller 23 of the microcomputer 20 determines that the detection signals are signals obtained from deformed erythrocytes.

Then, when determining that the detection signals are the detection signals of the deformed erythrocyte (Yes), the microcomputer 20 proceeds the processing to step S16. When determining that the detection signals are not the detection signals of the deformed erythrocyte (No), the microcomputer 20 proceeds the processing to step S17.

At step S16, the microcomputer 20 controls the imaging optical system 24 (the light source 61 and the camera 64) to take a particle image. Specifically, the microcomputer 20 executes control of causing the light source 61 of the imaging optical system 24 to emit light, and executes control of causing the camera 64 to take an image in the flow cell at the timing of emission of the light source 61 of the imaging optical system 24. Then, data of the particle image taken by the camera 64 is stored in the memory of the microcomputer 20.

At step S17, the microcomputer 20 of the measuring section 12 determines whether or not the sample flow in the sheath flow cell 30 has ended. When determining that the sample flow in the sheath flow cell 30 has not ended (No), the microcomputer 20 returns the processing to step S14. When determining that the sample flow in the sheath flow cell 30 has ended (Yes), the microcomputer 20 proceeds the processing to step S18.

At step S18, the microcomputer 20 of the measuring section 12 transmits, to the system controller 13, the data of the detection signals by the optical detector 15 and the data of the particle image by the imaging optical system 24, which are stored in the memory, and ends the processing.

At step S3, the CPU 131a of the controller 13 of the system controller 13 determines whether or not the data has been received from the measuring section 12. When determining that the data has been received (Yes), the CPU 131a of the system controller 13 proceeds the processing to step S4.

At step S4, the CPU 131a of the system controller 13 analyzes the received data. Specifically, when the received data contains a particle image, the system controller 13 traces the image to obtain the outline of a particle included in the image, and obtains, based on the obtained outline, shape parameters for evaluating the shape of the particle.

The processing of tracing the image to obtain the outline of the particle can be executed, for example, based on the brightness difference between the background and the particle in the image. Specifically, the outline of the particle can be obtained by: setting a threshold for brightness value that can clearly distinguish between the background and the particle in the image; and binarizing the image based on the threshold. Alternatively, the particle may be extracted from the image by extracting, from the image, multiple points at which a brightness gradient (brightness difference from adjacent pixels) is equal to or greater than a predetermined threshold.

Examples of the shape parameters include a particle diameter (the diameter of the particle), a circle-equivalent diameter (particle diameter when the particle is assumed to be a perfect circle), and a degree of circularity (the degree of circularity of the particle when the degree of circularity of a perfect circle is 1).

Then, the system controller 13 determines whether or not the data transmitted from the measuring section 12 contains the data of the particle image (step S5). When determining that the data contains the particle image data (Yes), the system controller 13 displays, on the display 132, the particle image and the parameters obtained at step S4 (step S6), and ends the processing.

By adopting such a configuration, the operator can immediately visually confirm the particle image, taken by the imaging section, through the display. Further, when a deformed erythrocyte is contained in the sample, the image of the deformed erythrocyte and the parameters for evaluating the shape of the deformed erythrocyte are displayed. Thus, the operator can easily evaluate the degree of deformation of the erythrocyte by referring to the parameters while visually confirming the image.

As described above, in the present embodiment, the near ultraviolet light source is used as the light source 61 of the imaging optical system 24. Because near ultraviolet light has a wavelength shorter than that of visible light and near infrared light, the near ultraviolet light has low penetrability with respect to particles and high scattering efficiency. Thus, an image of a particle that is taken by the camera 64 is dark at the particle because the near ultraviolet light strongly scatters at the particle that is irradiated with near ultraviolet light, but the image is bright around the particle because the near ultraviolet light does not scatter around the particle. Due to this effect, an image in which the contrast between a particle and its background is clear and the outline of the particle is clearly exhibited can be obtained.

Further, for example, when a near infrared light source is used, a lens with a high numerical aperture needs to be used for increasing optical resolution. However, the depth of focus becomes shallow, and hence the flow cell has to be narrowed for causing a particle to fall within the depth of focus. This results in a reduction in a sample amount that can be processed per unit time.

In this respect, in the present embodiment, because the light source that emits near ultraviolet light with a wavelength shorter than that of near infrared light is used, the depth of focus can be sufficient even when a lens with a high numerical aperture is used, and thus the flow cell does not need to be narrowed.

Generally, erythrocytes in bloody urine, particularly, in bloody urine due to glomerular hematuria, are deformed in various forms such as bunch form, twisted form, and the like. Particularly, the contrast of a particle image of an erythrocyte (ghost erythrocyte) from which hemoglobin has been removed, among deformed erythrocytes, is difficult to be exhibited. Thus, in order to recognize a deformed erythrocyte contained in urine as a sample, the outline of the erythrocyte needs to be accurately taken. In this respect, when a near ultraviolet light source is used as the light source 61 of the imaging optical system 24 as in the present embodiment, it is possible to accurately determine whether or not an imaged particle is a deformed erythrocyte and to accurately determine the form of the deformed erythrocyte. Thus, it is possible to obtain clinical information that is useful for knowing the deformation form of a deformed erythrocyte that is of clinical importance, and for knowing the origin (a region entrapped in a biological sample) of the deformed erythrocyte by the degree of the deformation.

Although the red light source is used as the light source 41 of the optical detector 15, side fluorescence from a particle that is excited by irradiation with the light from the light source 41 has a wavelength longer than that of the light of the light source 41. Thus, in the present embodiment, it is configured such that, by using, as the light source 61 of the imaging optical system 24, a near ultraviolet light source with a wavelength shorter than that of the light source 41 of the optical detector 15, the wavelength difference between the near ultraviolet light of the light source 61 of the imaging optical system 24 and side fluorescence from a particle, which is generated due to the light of the light source 41 of the optical detector 15, becomes great. Thus, as shown in FIG. 4, the near ultraviolet light of the light source 61 of the imaging optical system 24 and the side fluorescence from the particle become parallel to each other so as to overlap each other, but can be appropriately separated by using the first dichroic mirror 46 due to the great wavelength difference therebetween.

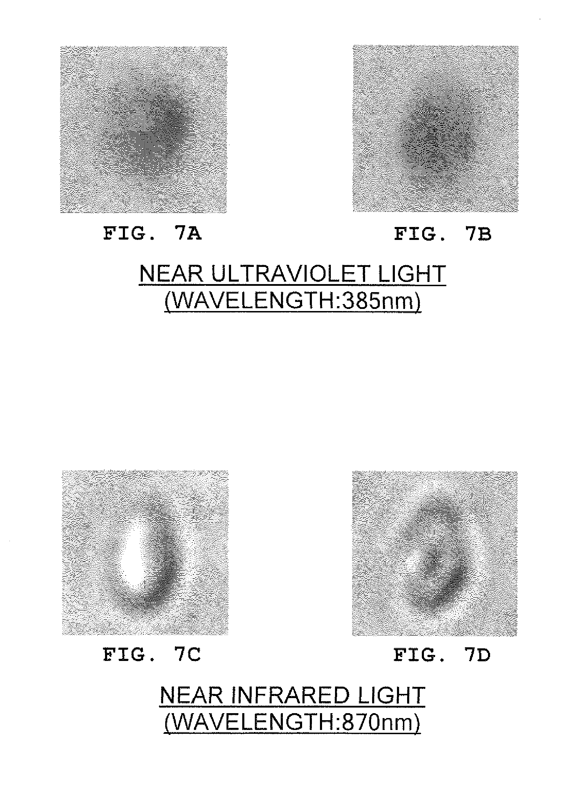

FIGS. 7A and 7B are images of erythrocytes that are taken using a light source of near ultraviolet light (a wavelength of 385 nm). FIGS. 7C and 7D are images of erythrocytes that are taken using a light source of near infrared light (a wavelength of 870 nm). These images are images of normal erythrocytes.

Referring to FIGS. 7C and 7D, because the near infrared light has high penetrability, the images of the erythrocytes taken using the light source of the near infrared light are blurred in white at the peripheries of the erythrocytes and are white at the central portions of the erythrocytes. Thus, when the outline of the erythrocyte is traced based on the contrast of the image, black portions bent in the U shape are taken as the outline of the erythrocyte, and hence it is difficult to accurately recognize the shape of the erythrocyte.

On the other hand, referring to FIGS. 7A and 7B, the near ultraviolet light efficiently scatters at the particle surfaces due to its low penetrability. Thus, the images of the erythrocytes taken using the light source of the near ultraviolet light are not bright at the central portions of the erythrocytes, and the contrast between the erythrocytes and the backgrounds are clearly exhibited in the images. Thus, it is possible to obtain the accurate outline of the erythrocyte based on the contrast between the erythrocyte and the background, and thus it is possible to determine an accurate shape of the erythrocyte.

The present invention is not limited to the above embodiment, and various modifications are possible.

For example, the sample analyzer of the present invention is not limited to a urine formed element analyzer, and is applicable to other sample analyzers such as blood analyzers. Further, a particle whose image is taken by the imaging optical system is not limited to an erythrocyte, and any particles whose images can be taken by using the near ultraviolet light source, such as leukocytes, epithelial cells, and the like, can be imaging objects. The light source of the imaging optical system is not limited to the light-emitting diode, and a semiconductor laser can be used.

## Claims

1. A sample analyzer comprising:
a flow cell for forming a sample flow;
a light source for irradiating the sample flow in the flow cell with near ultraviolet light; and
an imaging section for taking an image of a particle contained in the sample flow irradiated with the near ultraviolet light by the light source.

2. The sample analyzer according to claim 1, further comprising a drive circuit for controlling the light source to perform pulse emission.

3. The sample analyzer according to claim 1 or 2, further comprising:
a particle detector for detecting the particle contained in the sample flow in the flow cell; and
an imaging controller for, when the particle is detected by the particle detector, controlling the imaging section to take an image of the detected particle.

4. The sample analyzer according to claim 3, wherein
the particle detector comprises: a second light source for irradiating the sample flow in the flow cell with light having a wavelength longer than that of the near ultraviolet light emitted by the light source; and a light receiver for receiving fluorescence from a particle that is excited by the irradiation light of the second light source.

5. The sample analyzer according to claim 4, wherein
the light source, the second light source, and the particle detector are configured to prevent a particle from being detected due to fluorescence emitted from the particle that is excited by the irradiation with the near ultraviolet light from the light source.

6. The sample analyzer according to any one of claims 1 to 5, further comprising:
a display; and
a display controller for controlling the display to display thereon the image of the particle that is taken by the imaging section.

7. The sample analyzer according to claim 6, wherein
when the image of the particle is taken by the imaging section, the display controller causes the display to display thereon the image of the particle.

8. The sample analyzer according to any one of claims 1 to 7, further comprising a light selector positioned between the flow cell and the imaging section, the light selector being configured to select near ultraviolet light and allow the near ultraviolet light to pass therethrough.

9. The sample analyzer according to any one of claims 1 to 8, further comprising:
an irradiation lens system positioned between the light source and the flow cell; and
an imaging lens system positioned between the flow cell and the imaging section, wherein
a numerical aperture of the irradiation lens system is set so as to be less than a numerical aperture of the imaging lens system.

10. The sample analyzer according to any one of claims 1 to 9, further comprising a sample preparing section for preparing a sample using urine, and for supplying the sample to the flow cell, wherein
the imaging section is configured to take an image of a urine formed element as the particle.

11. The sample analyzer according to any one of claims 3 to 5, wherein
when a deformed erythrocyte is detected by the particle detector, the imaging controller controls the imaging section to take an image of the deformed erythrocyte.

12. The sample analyzer according to any one of claims 1 to 11 , wherein
the light source is configured to emit, as the near ultraviolet light, light with a peak wavelength between 200 and 400 nm.

13. The sample analyzer according to any one of claims 1 to 12, further comprising an analyzing section for analyzing the taken image, and for obtaining an analysis result of the particle contained in the sample.

14. A method for analyzing a sample comprising:
supplying a sample to a flow cell to form a sample flow;
irradiating the sample flow with near ultraviolet light; and
taking an image of a particle contained in the sample flow irradiated with the near ultraviolet light.

15. The method according to claim 14, wherein the irradiating is performed by irradiation with light by pulse emission.
